# EUROPEAN PATENT APPLICATION

(11) **EP 4 383 525 A1**
(43) Date of publication of application: **12.06.2024**
(21) Application number: 22212486.9
(22) Date of filing: 09.12.2022
(51) Int. Cl.: H02K 3/18, H02K 3/32, H02K 1/14

(54) **MOTOR COIL AND MOTOR STATOR**

(71) Applicant: Fukuta Electric & Machinery Co., Ltd., Miaoli County 366003 (TW)
(72) Inventor: CHANG, Chin-Feng, Miaoli County 366003 (TW); CHU, Chih-Meng, Miaoli County 366003 (TW); WU, Zhi-Zheng, Miaoli County 366003 (TW); CHANG, Chen-Hui, Miaoli County 366003 (TW)
(74) Representative: Straus, Alexander

(57) **Abstract**

A motor coil, which is a metal coil formed by a metal wire, the thickness of the metal wire is gradually decreased from the first end portion of the metal wire to the second end portion of the metal wire and any cross-sectional area of the metal wire is equal. The metal coil is a plural laminated layer of the metal wires forming a spiral shape along a surrounding direction. A motor stator comprises a stator core set having a plurality of teeth and the metal coil being sleeved on the outer surface of each stator core set, so that the first and the second end portion will face toward a motor core portion and outer portion respectively. The metal wire has a polymer layer on the outer surface, and an insulative coating is provided between the polymer layer and the metal wire.

## Description

### FIELD OF THE INVENTION

The present disclosure relates to a motor coil, more particularly, a motor stator coil with high density.

### BACKGROUND OF THE INVENTION

The motor coil must be matched to the slot pattern and size of the stator core before proceeding with the winding and feeding of the wires and this limits the number of coils wound on the stator core and the method of winding the coils. As a result, the density of the motor coils wound on the stator core is generally not high in the market, further affecting the efficiency of motor operation. However, if a higher wire feeding and production are expected, the corresponding core slot should be enlarged to accommodate more coils, but the overall volume of other mechanisms and the housing will be enlarged at the same time, which could result in the overall volume and weight of the motor to be increased.

The coils will generate a high temperature when the motor is in operation and the high temperature will affect the motor's performance and its service life. Therefore, if the thermal conductivity between the coils and the stator core can be increased, the coil's heat-radiating efficiency and motor service life will be improved simultaneously. Hence, how to increase the density of the coils wound on the stator core, enhance the efficiency of the motor, and increase the thermal conductivity between the coils and the stator core become an urgent issue that needs to be solved in the field.

### SUMMARY OF THE INVENTION

The present disclosure provides a motor coil and a motor stator with such a motor coil.

A motor coil, which is a metal coil formed by a metal wire, wherein the metal wire has a first end portion and a second end portion, the thickness of the metal wire is gradually decreased from the first end portion to the second end portion, and any cross-sectional area of the metal wire is equal. Wherein, the metal coil is a plural laminated layer of the metal wire forming a spiral shape along a surrounding direction.

Wherein, the layer has a width that gradually increases from a motor core portion to a motor outer portion.

Wherein, the outer surface of the metal coil has a polymer layer.

Wherein, an insulative coating is provided between the polymer layer and the outer surface of the metal coil.

Wherein, the insulative coating is a material of polyimide (PI).

Wherein, the polymer layer is made of liquid crystal polymer, polyether ether ketone, or polyphenylene sulfide.

Wherein, the number of the coil turns of the metal coil in an extension direction of each unit is one.

A motor stator, comprising: a stator core set having a plurality of teeth that includes a surrounding part and a slot provided at each side of the surrounding part. A plurality of metal coils, each of which is formed by the aforementioned metal wire. Wherein, each of the metal coils is sleeved on the surrounding part, so that the first and the second end portion of the metal wire will face toward the core portion and outer portion respectively. The outer surface of the metal coils has a polymer layer, wherein the insulative coating is provided between the polymer layer and the outer surface of the metal coil.

Wherein, the stator core set is in a ring-shape arrangement, an annular core is sleeved on the outer side of the stator core set, a space for accommodating the metal coil is formed between the teeth and the annular core, and the metal coil takes at least 85% of the capacity of the space.

Wherein, the thickness of the polymer layer covered around the outer surface of the metal coil is 0.5 mm to 0.8 mm.

### BRIEF DESCRIPTION OF THE DRAWINGS

FIG. 1 is a three-dimensional schematic diagram of a side view of a metal coil of an embodiment of the present disclosure;
FIG. 2 is a top-view schematic diagram of a metal coil of the present disclosure;
FIG. 3 is an exploded schematic diagram of a metal coil and the teeth of the present disclosure;
FIG. 4 is a schematic diagram of an embodiment of the present disclosure in which the metal coil and the teeth are combined;
FIG. 5 is a sectional schematic diagram of a motor stator of an embodiment of the present disclosure;
FIG. 6 is a sectional schematic diagram of a partial enlargement of the motor stator of an embodiment of the present disclosure; and
FIG. 7 is an exploded three-dimensional schematic diagram of the motor stator of an embodiment of the present disclosure

### DESCRIPTION OF THE PREFERRED EMBODIMENTS

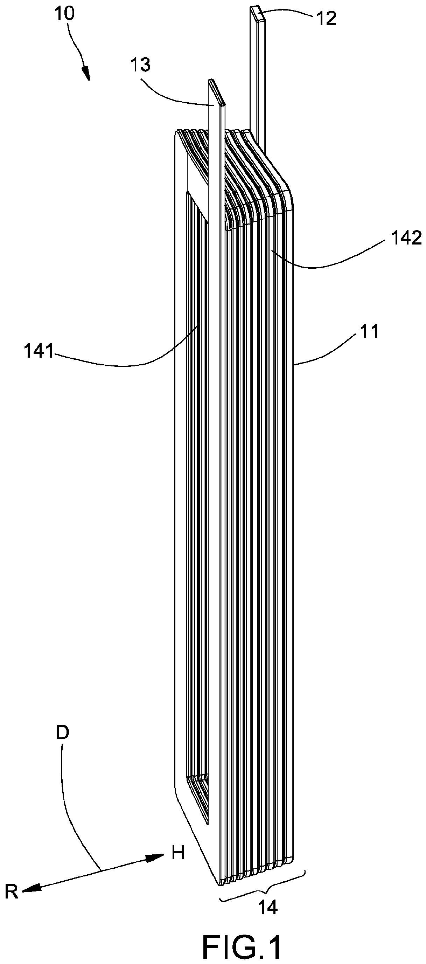

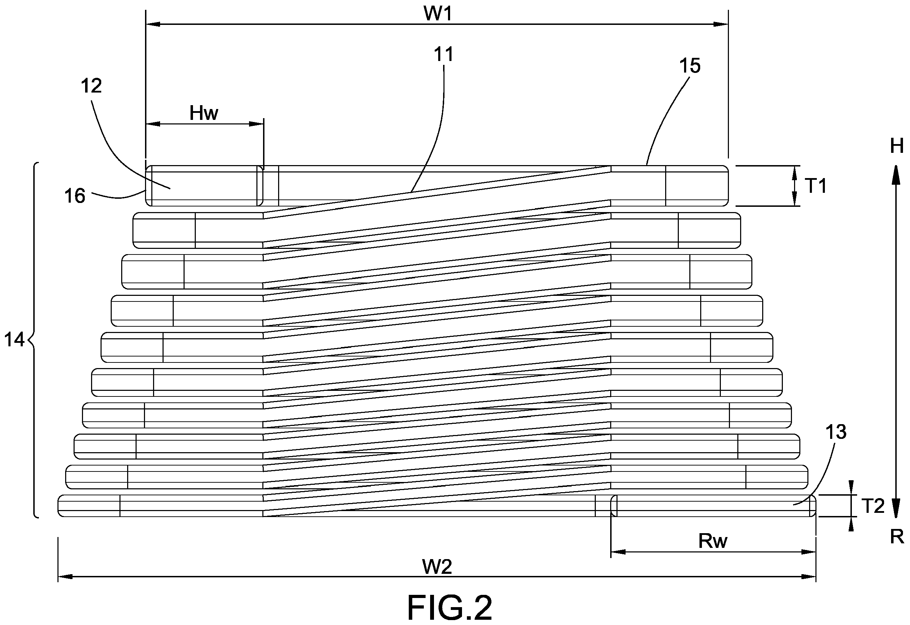

Please refer to FIGS. 1 and 2, which shows a metal coil 10 of the motor coil.

The motor coil of the present disclosure is applied to a low-speed and high-torque motor with a speed of about 1000 rpm and a torque of 200 N-m. The motor coil is wound with a flat copper wire, so the metal coil 10 is composed of a flat metal wire 11 which has a first end portion 12 near the motor core portion H and a second end portion 13 near the motor outer portion R. When the motor core portion H and the motor outer portion R are regarded as the extension direction D of the metal coil 10, the metal wire 11 forms the metal coil 10 by surrounding along the extension direction D and in each unit of the metal coil 10 has only one turn of the coil in the extension direction D. In other words, between the first end portion 12 and the second end portion 13 of the metal wire 11 contains a spiral-shaped layer 14.

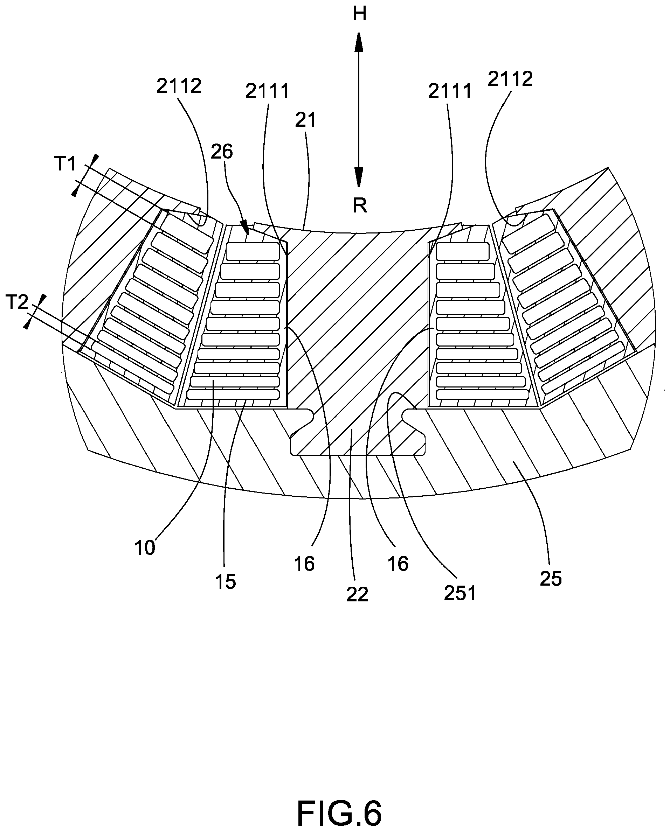

If the size of copper wires in the same circuit is too different, it may lead to a skin effect and increase copper loss. Therefore, the area of the copper wires at different positions should be the same as possible. Please refer to FIG. 6, in this embodiment, the thickness of the metal wire 11 is gradually decreased from the first end portion 12 to the second end portion 13, i.e., the thickness T1 of the first end portion 12 is greater than the thickness T2 of the second end portion 13, in order to meet the requirement of the wire area of each part of the metal wire 11 is substantially equal along the surrounding direction, the width of the flat metal wire 11 shall be gradually increased, i.e., the wire width Hw of the first end portion 12 is smaller than the wire width Rw of the second end portion 13. In some embodiment, the thickness of the metal wire 11 may be gradually decreased in the surrounding direction. However, in some embodiment, it is also possible that metal wire 11 has the same thickness for each (turn) coil and different thicknesses for different layers 14 of coils.

In the coils that are formed as layers 14, the inner side 141 of each coil is on the same surface, so that the width of the outer side 142 of the metal coil 10 will gradually become wider along the extension direction D of the metal coil 10 toward the motor outer portion R, i.e., the coil width W1 near the first end portion 12 is smaller than the coil width W2 near the second end portion 13, i.e., if viewing from the extension direction D of the motor core portion H towards the motor outer portion R, the cross-sections of a plurality of layers 14 form a trapezoidal shape.

The metal wire 11 is covered with an insulative coating 15 before forming the metal coil 10, and the insulative coating 15 can withstand high temperatures of 300°C to 400°C. In this embodiment, the insulative coating 15 is made of polyimide (PI), and the outer surface of the insulative coating 15 has a polymer layer 16 which is used to enhance thermal conductivity and is made of liquid crystal polymers, polyether ether ketone, or polyphenylene sulfide.

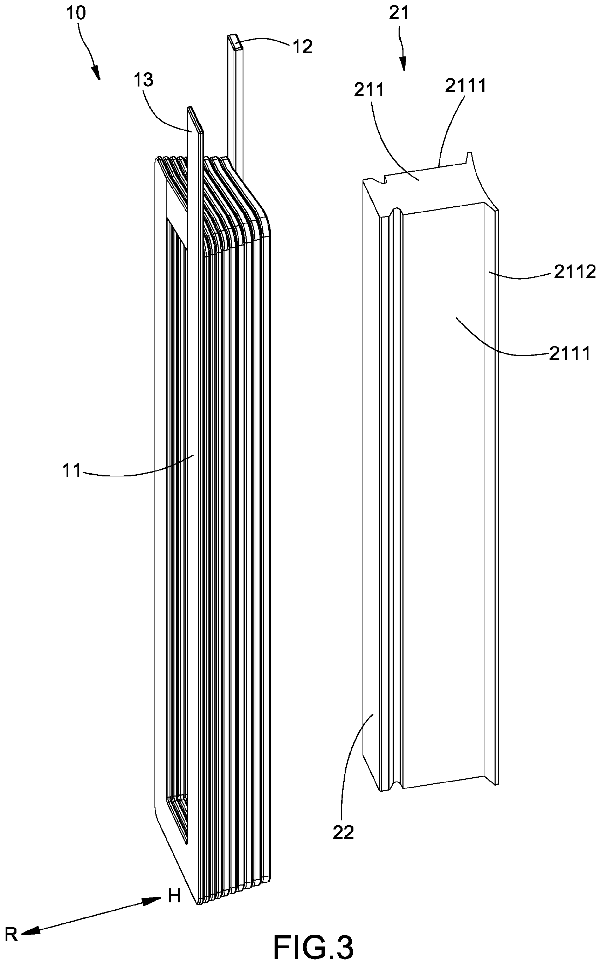

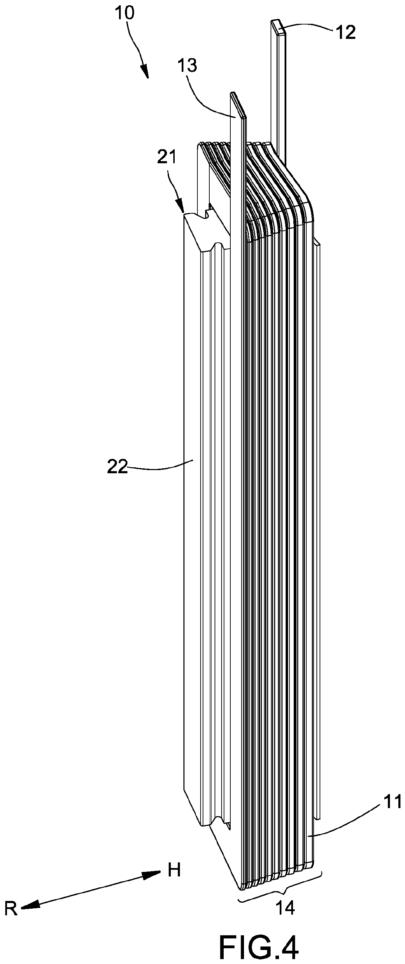

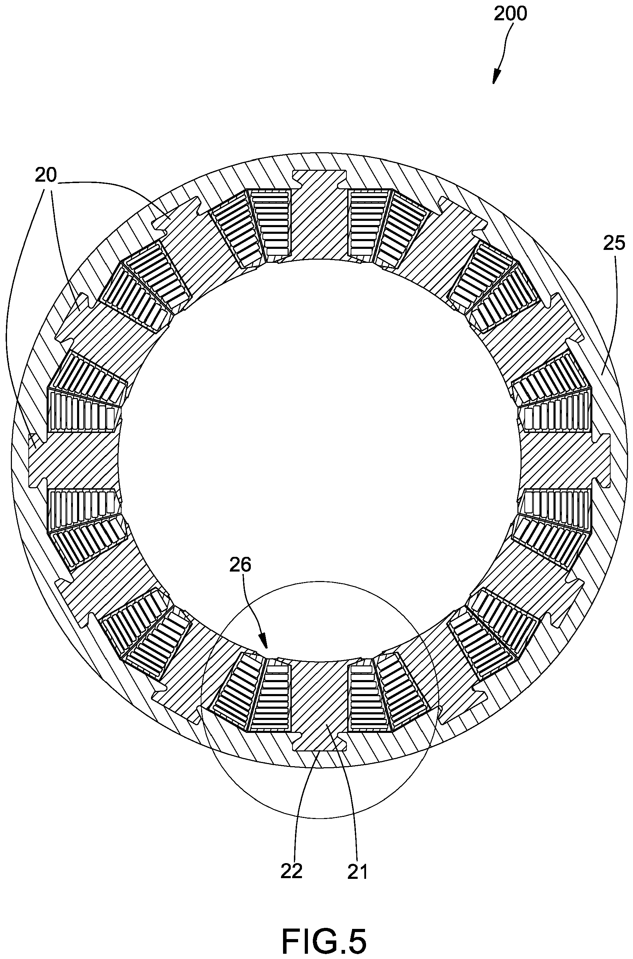

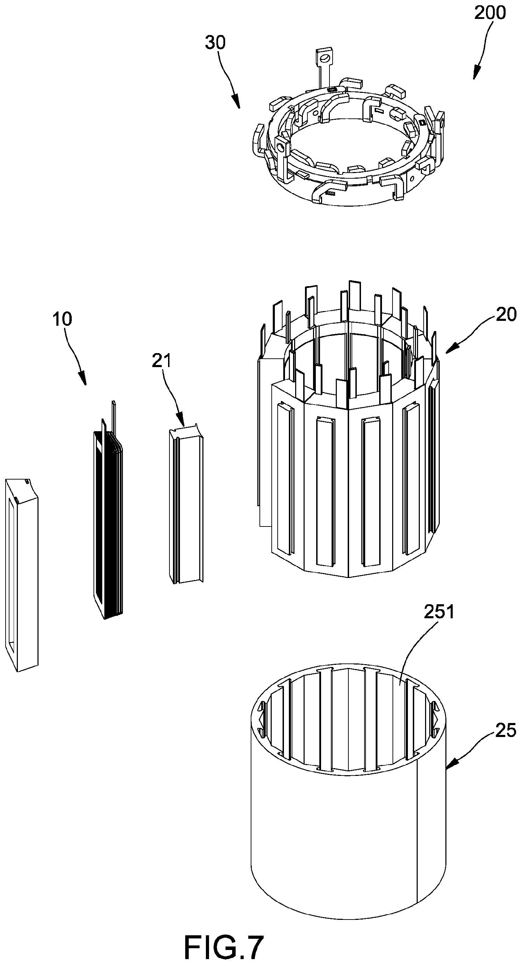

Please refer to FIGS. 3 to 7, which are an embodiment of a motor stator 200, comprising a stator core set 20, a plurality of metal coils 10, and an annular core 25.

The stator core set 20 has a plurality of teeth 21 having a surrounding part 211 and a mounting end 22, and the surrounding part 211 has a slot 2111 at each side of the teeth 21.

The structure of the metal coil 10 has been described in the embodiment shown in FIGS. 1 and 2, so the same portion will not be elaborated any further. The metal coil 10 is sleeved on the surrounding part 211 from the mounting end 22 of the teeth 21 and stops against the lateral wall 2112 of the slot 2111, whereupon the inner side 141 of each coil of the layer 14 of the metal coil 10 conforms to the profile of the surrounding part 211, further, a plurality of stator core set 20 are formed a ring-shape arrangement so that the mounting end 22 of the teeth 21 is oriented toward the motor outer portion R and is engaged with the inner surface 251 of the annular core 25. Meanwhile, the metal coil 10 will be confined in the space 26 formed between the lateral wall 2112 of the slot 2111 and the inner surface 251 of the annular core 25. In addition, the metal coils 10 may take at least 85% of the capacity of each space 26.

Worth to mention that when the metal coil 10 is sleeved on the surrounding part 211, the coil near the first end portion 12 has a smaller coil width W1 and faces toward the motor core portion H, while the coil near the second end portion 13 has a larger coil width W2 and faces toward the motor outer portion R, so that the metal coil 10 can fill the space near the motor outer portion R to take at least 85% of the capacity of the space 26. In addition, the thickness of each layer14 is gradually decreased toward the motor outer portion R, so that the size of the motor stator 200 can also be reduced.

When the metal coil 10 is sleeved on the surrounding part 211 of the teeth 21 and located in the slot 2111, the polymer layer 16 is covered around the outer surface of the metal coil 10, and the thickness of the covering is 0.5 mm to 0.8 mm. In this embodiment, the polymer layer 16 is made of a high-flowing liquid crystal polymer, which allows the metal coil 10 to be partitioned from the slot 2111 and prevents the short circuits caused by the damage of the insulative coating 15 on the coil surface. Use of the polymer layer 16 increases the thickness of the metal coil 10 which can reduce the production risk and increase the strength of layer 14 before the metal coil 10 is sleeved on the teeth 21.

After covering with the polymer layer 16, the metal coil 10 can also avoid frictional damage due to direct contact with the teeth 21 as the motor is excited and vibrates at high speed. Moreover, in a low voltage motor, such as the maximum motor drive voltage of 96VDC in this embodiment, if it can use a material with good flowability to be the polymer layer 16, the thickness of the insulation layer formed on the metal coil 10 will be thinner and flatter which can improve the geometric accuracy after forming. Compared with using insulating paper as the insulating layer, the flat surface of the polymer layer 16 can make the thermal conductivity even better.

The motor stator 200 is additionally provided with a busbar 30, which is connected to the first end portion 12 and the second end portion 13 of each metal coil 10 respectively, so that the multiple stator core sets 20 can be connected in series with each other.

In conclusion, the metal coil 10 used in this embodiment has a winding structure that meets the figure of the space 26 between the slot 2111 at the side of the teeth 21 of the motor stator 200 and the inner surface 251 of the annular core 25, so that the metal coil 10 can surround the teeth 21 with high density which can reduce the current density, thereby reducing the loss of electrical energy and increasing the efficiency of the motor. In addition to reducing the overall motor size and weight by using the motor coil, the high-flowability polymer layer 16 fills in between the metal coil 10 and the slot 2111 and lets the polymer payer covering around the metal coil 10 which can also form an ultra-thin outer layer, reducing the gap between the metal coil 10 and the teeth 21, increasing the thermal conductivity between the metal coil 10 and the teeth 21, and consequently increasing the heat-radiating efficiency of the metal coil 10.

In other embodiments, the metal coils 10 take at least 90%, or at least 95%, of the capacity of each slot 2111.

## Claims

1. A motor coil, which is a metal coil(10) formed by a metal wire(11), **characterized in that**,
wherein, the metal wire(11) has a first end portion(12) and a second end portion(13), the thickness(T1,T2) of the metal wire(11) is gradually decreased from the first end portion(12) to the second end portion(13), and any cross-sectional area of the metal wire(11) is substantially the same;
wherein, the metal coil(10) is a plural laminated layer(14) of the metal wire(11) forming a spiral shape along a surrounding direction.

2. The motor coil according to claim 1, wherein the outer surface of the metal coil has a polymer layer(16).

3. The motor coil according to claim 2, wherein the polymer layer(16) is made of liquid crystal polymer, polyether ether ketone, or polyphenylene sulfide.

4. The motor coil according to claims 2 or 3, wherein an insulative coating(15) is provided between the polymer layer(16) and the outer surface of the metal coil(10).

5. The motor coil according to claim 4, wherein the insulative coating(15) is a material of polyimide.

6. The motor coil according to any one of above claims, wherein the metal wire (11) has the same thickness for each turn of metal coil(10) and different thicknesses for different laminated layer (14) of metal coil(10).

7. The motor coil according to any one of above claims, wherein the number of the coil turns of the metal coil(10) in an extension direction(D) of each unit is one.

8. The motor coil according to any one of above claims, wherein the width(W1,W2) of the metal coil(10) is gradually increased from a motor core portion(H) to a motor outer portion(R).

9. The motor stator, comprising:
a stator core set(20) having a plurality of teeth(21) that includes a surrounding part(211) and a slot(2111) provided at each side of the surrounding part(211), **characterized in that**,
a plurality of metal coils(10), each of which is formed by the metal wire(11) as described in claim 1;
wherein, each of the metal coils(10) is sleeved on the surrounding part(21), so that the first end portion(12) and the second end portion(13) of the metal wire(11) face toward the core portion(H) and the outer portion(R) respectively; an outer surface of the metal coils(10) has a polymer layer(16)wherein an insulative coating(15) is provided between the polymer layer(16) and the outer surface of the metal coil(10).

10. The motor stator according to claim 8, wherein the stator core set(20) is in a ring-shape arrangement, an annular core(25) is sleeved on the outer side(142) of the stator core set(20), the teeth(21) and the annular core(25) forms a space(26) therebetween for accommodating the metal coil(10), and the metal coil(10) takes at least 85% of the capacity of the space(26).

11. The motor stator according to any one of claims 9 and 10, wherein the thickness of the polymer layer(16) covered around the outer surface of the metal coil(10) is 0.5 mm to 0.8 mm.

12. The motor stator according to any one of claims 9 to 11, wherein the polymer layer(16) is made of liquid crystal polymer, polyether ether ketone, or polyphenylene sulfide.

13. The motor stator according to any one of claims 9 to 12, wherein the insulative coating(15) is a material of polyimide.
